# EUROPEAN PATENT APPLICATION

(11) **EP 2 615 809 A1**
(43) Date of publication of application: **17.07.2013**
(21) Application number: 12151097.8
(22) Date of filing: 13.01.2012
(51) Int. Cl.: H04M 1/725

(54) **Wireless communication system for transmitting hyperlink associated with secondary resource and related methods**

(71) Applicant: Research In Motion Limited, Waterloo, ON N2L 3W8 (CA)
(72) Inventor: Hill, Casey, Crystal Lake, IL Illinois 60014 (US)
(74) Representative: Greenaway, Martin William

(57) **Abstract**

A wireless communication system may include a mobile wireless communications device having a first display configured to display a primary resource having a hyperlink therein associated with a secondary resource, a first near field communication (NFC) transceiver, and a first controller coupled to the first display and the first NFC transceiver. The wireless communication system may also include a computing device having a second display, a second NFC transceiver, and a second controller coupled to the second display and the second NFC transceiver. The first controller may be configured to store the hyperlink based upon displaying of the primary resource on the first display without displaying the secondary resource on the first display, and to send the stored hyperlink to the computing device using the first and second NFC transceivers, and the second controller may be configured to display the secondary resource associated with the hyperlink on the second display.

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of an example embodiment of a wireless communication system.

FIG. 2 is a flowchart illustrating method aspects associated with operation of the wireless communication system of FIG. 1.

FIG. 3 is a screenshot from the mobile wireless communications device from FIG. 1.

FIG. 4 is a screenshot from the computing device from FIG. 1.

FIG. 5 is a schematic block diagram illustrating example components of a mobile wireless communications device that may be used with the communication system of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communication system is provided herein which may include at least one mobile wireless communications device comprising a first display configured to display a primary resource having at least one hyperlink therein associated with a secondary resource, a first near field communication (NFC) transceiver, and a first controller coupled to the first display and the first NFC transceiver. The system may further include a computing device comprising a second display, a second NFC transceiver, and a second controller coupled to the second display and the second NFC transceiver. The first controller may be configured to store the at least one hyperlink based upon displaying of the primary resource on the first display and without displaying the secondary resource on the first display, and to send the stored at least one hyperlink to the computing device using the first and second NFC transceivers. The second controller may be configured to display the secondary resource associated with the at least one hyperlink on the second display.

More particularly, the primary resource may comprise at least one of a Web page and an electronic mail (email) message, and the secondary resource may comprise at least one of a Web page and a digital document, for example. The first controller may selectively send the stored at least one hyperlink associated with the secondary resource based upon at least one of a stored preference value or a priority value. Additionally, the first controller may be further configured to send a parent hyperlink associated with the primary resource to the computing device.

The first controller may also cooperate with the first display to provide graphical user interface prompts for sending the stored at least one hyperlink to the computing device. By way of example, the at least one hyperlink may comprise a plurality of nested hyperlinks. In some example embodiments, the second display may be larger than the first display. Also by way of example, the computing device may comprise at least one of a personal computer or a tablet computing device.

A related mobile wireless communications device, such as the one described briefly above, as well as a method for operating a wireless communications system are also provided. The method may include using the at least one mobile wireless communications device to store the at least one hyperlink based upon displaying of the primary resource on the first display and without displaying the secondary resource on the first display, and to send the stored at least one hyperlink to the computing device with the first and second NFC transceivers. The method may further include using the computing device to display the secondary resource associated with the at least one hyperlink on the second display.

A related computer-readable medium for a mobile wireless communications device comprising a display and a near field communication (NFC) transceiver is also provided. The computer-readable medium may have computer-executable instructions for causing the mobile wireless communications device to perform steps comprising displaying a primary resource on the display having at least one hyperlink therein associated with a secondary resource, storing the at least one hyperlink based upon displaying of the primary resource on the display and without displaying the secondary resource on the display, and sending the stored at least one hyperlink to a computing device for display thereon using the NFC transceiver.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

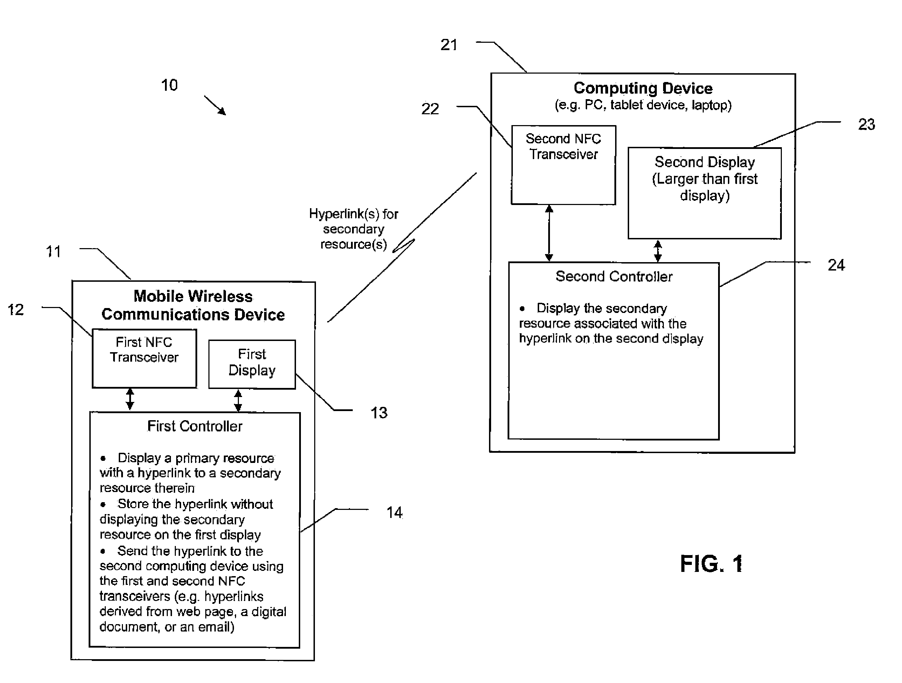

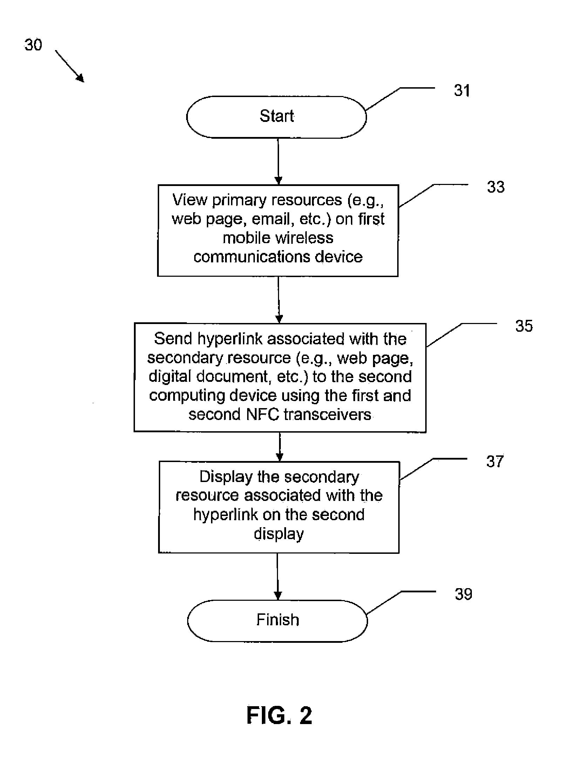

Referring now to FIG. 1, a wireless communication system **10** according to the present disclosure is now described. Moreover, with reference additionally to FIG. 2, a flowchart **30** illustrates a method of operating the wireless communication system **10,** which begins at Block **31.** The wireless communication system **10** illustratively includes a mobile wireless communications device **11** (also referred to as a "mobile device" herein) and a computing device **21** communicating with each other. The mobile wireless communications device **11** illustratively includes a first display **13** configured to display primary resources, a first NFC transceiver **12** configured to communicate based upon proximity, and a first controller **14** coupled to the first display and the first NFC transceiver.

Generally speaking, the primary resources may comprise Web pages, digital documents, electronic mail (email) messages, blogs, etc. In some embodiments, the primary resources may be formatted for mobile devices, e.g., "small" format versions or resources, such as text only resources, single text column resources, etc. Resources formatted for mobile devices may be particularly advantageous in that they display more quickly and readily on the relatively smaller displays typically present on such devices (e.g., smartphones, etc.), especially where such devices are downloading content over a relatively slow wireless data connection (e.g., a cellular connection), as opposed to a faster connection such as a WiFi network, etc.

Whether the primary resources being viewed on a mobile device are formatted for a mobile device or not, such resources often have hyperlinks included therein which link to secondary resources. These secondary resources may also comprise Web pages, digital documents, blogs, etc. However, in many instances it may be cumbersome to click on such hyperlinks and view the secondary sources from the mobile device, whether because of screen size, download speed, etc. Yet, it may still be desirable to view the secondary sources on a second display **23** of the computer device **21,** as for example, computing devices such as tablet computer, desktop computers, etc.

More particularly, the secondary resources may be provisioned for viewing on robust full computing devices, or may comprise any resource (mobile or non-mobile provisioned) that is tedious for viewing on the mobile wireless communications device **11.** Moreover, the second display **23** may have a greater screen resolution and/or screen size than that of the first display **13.** For example, the second display **23** may comprise a screen 7-27 inches in size with a resolution of 1024x768 or larger, whereas the first display **13** may comprise a screen 3-5 inches in size with a resolution of about 480x360. However, other screen sizes and resolutions may be used in different embodiments.

By way of example, the mobile device **11** may comprise portable or personal media players (e.g., music or MP3 players, video players, etc.), remote controls (e.g., television or stereo remotes, etc.), portable gaming devices, portable or mobile telephones, smartphones, tablet computers, etc. Also by way of example, the computing device **21** may comprise a tablet computer, a personal computer, a laptop computer, etc. In short, regardless of the particular application, the second display **23** or graphical processing capacity of the computing device **21** will generally be more capable than the first display **13** or graphical processing capacity of the mobile device **11.**

The computing device **21** further illustratively includes a second NFC transceiver **22** configured to communicate based upon proximity, and a second controller **24** coupled to the second display **23** and the second NFC transceiver. During use of the mobile device **11,** i.e., while displaying the primary resources, the hyperlinks to secondary resources may also be shown on the first display **13** (Block **33).** For example, the first controller **14** may be configured to display hyperlinks associated with secondary resources, such as Web pages, digital documents (e.g., PDF, work processing documents, spreadsheets, etc.), emails, etc. Attempting to view such secondary resources on the mobile wireless communications device **11** may result in a frustrating and undesirable experience. As such, the first controller **14** advantageously collects or extracts such hyperlinks from the displayed primary resources, and stores the hyperlinks in a similar fashion to a browsing history in a database. However, as opposed to merely storing a list of hyperlinks that have already been viewed, the first controller **14** advantageously stores lists of hyperlinks that have not already been viewed, but which were included in primary resources that have been viewed.

The first controller **14** may also store other attribute values associated with the secondary resources, such as a desired screen resolution size, a stored preference value, a priority value, etc. In other words, the first controller **14** may advantageously harvest or extract links to the secondary resources automatically and without user intervention for later viewing on a more convenient display (i.e., on the second display **23).** Moreover, in some embodiments, the first controller **14** processes the viewed secondary resources for nested hyperlinks (i.e., hyperlinks that are listed within the secondary resources) and includes them also in the hyperlink database as well. After such use, when the mobile device **11** communicates with the computing device **21** via the first and second NFC transceivers **12, 22,** the first controller **14** conveniently sends the stored hyperlink(s) associated with the secondary resource(s) to the computing device (Block **35).**

For example, this transmission may occur during the typical swipe or bump between the first and second NFC transceivers **12, 22.** Also, this transmission may be automatic, and initiated based upon commencement of NFC communication between the first and second NFC transceivers **12, 22,** or may be authorized via a command entered manually via an input device, for example.

Once the hyperlink(s) associated with the secondary resource(s) is received at the computing device **21,** the second controller **24** is illustratively configured to display the secondary resource(s) on the second display **23** (Blocks **37, 39).** Advantageously, the viewing experience is enhanced since the second display **23** has greater screen size, screen resolution, graphical processing capacity, etc. Moreover, the hyperlinks corresponding to secondary resources (and, in some embodiments, hyperlinks corresponding to the primary resources as well) may be automatically transferred to the computing device **21** without onerous effort. In some instances, the received hyperlinks may be displayed in a menu by the controller on the second display **23,** providing a browsing history for which secondary sources were linked with which primary sources, etc., as will be discussed further below. In this regard, other information may also be sent with the hyperlinks, such as names of primary resources from which respective hyperlinks were extracted, etc.

In some example embodiments, the first controller **14** may selectively send hyperlinks associated with secondary resources based upon a desired screen resolution size, the stored preference value, or the priority value. Indeed, the first controller **14** may selectively filter which hyperlinks are sent to the computing device **21** based upon user preference, priority, etc. For example, the first controller **14** may be configured to send hyperlinks for websites only, thereby omitting hyperlinks to digital document formats, such as PDFs, word processing docs, etc. In other examples, the first controller **14** may omit hyperlinks based upon the content of the resource, such as barring hyperlinks related to obscene or time sensitive resources (i.e., where the secondary resource likely will be "stale" when eventually viewed on the computing device **21).**

Additionally, in some example embodiments, for hyperlinks associated with mobile-formatted resources, the first controller **14** may be configured to send hyperlinks corresponding to non-mobile-formatted resources to the computing device **21** using the first and second NFC transceivers **12, 22.** In such cases, the first controller **14** recognizes that a currently viewed primary resource, such as, http://mobile.somemediawebsite.com, has a secondary equivalent, again, for example, http://www.somemediawebsite.com, and sends the non-mobile-formatted resource hyperlink to the computing device **21** for the second controller **24** to display the secondary resource corresponding with the primary resource on the second display **23.** Likewise, it is desired to a list or menu of links from the second controller **24** back to the first controller **14** for viewing on the first display **13** "on the go", the second controller may similarly provide links that are formatted for a mobile version of a resource rather than a non-mobile version.

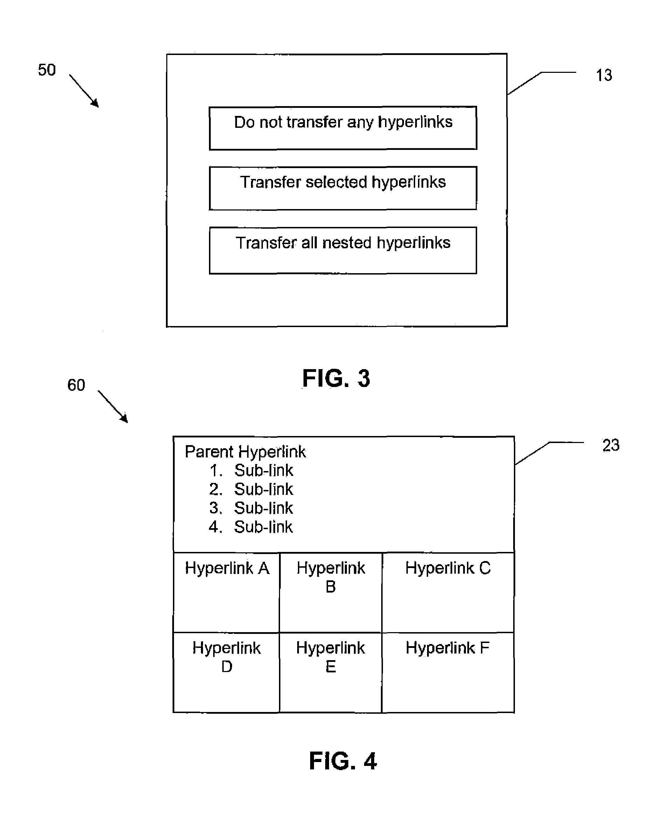

On the mobile wireless communications device **11,** the first controller **14** may cooperate with the first display **13** to provide graphical user interface (GUI) prompts for sending hyperlinks associated with secondary resources to the computing device **21.** This enables selective sending and omitting of hyperlinks being transferred to the computing device **21** for subsequent viewing. For example, and as shown in the screenshot **50** of FIG. 3, while viewing a secondary resource on the first display **13,** the GUI prompt may provide several options, e.g., not to transfer any hyperlinks, transfer only selected resource hyperlinks, transfer all nested hyperlinks, etc.

Once the hyperlinks are transferred to the computing device **21,** a software-based client may receive and processes these hyperlinks for presentation on the second display **23.** In one example, and as shown in the screenshot **60** of FIG. 4, the secondary resources may be presented simultaneously in a tiled format for selected enlargement using a typical input pointing device. In another example (FIG. 4), the second controller **24** may be configured to display a parent hyperlink (i.e., a hyperlink associated with the primary resource) and the associated nested hyperlinks in a tiered format on the second display **23,** as noted above. Also, the second controller **24** may prompt for selective viewing of nested links and sub-links out of order, i.e. viewing the nested links and sub-links before a parent link. Advantageously, the second controller **24** may be configured to display the parent link and associated nested hyperlinks with relational data, for example, a hyperlink for a parent website for a resort and the nested hyperlinks including restaurants and attractions at the resort, etc.

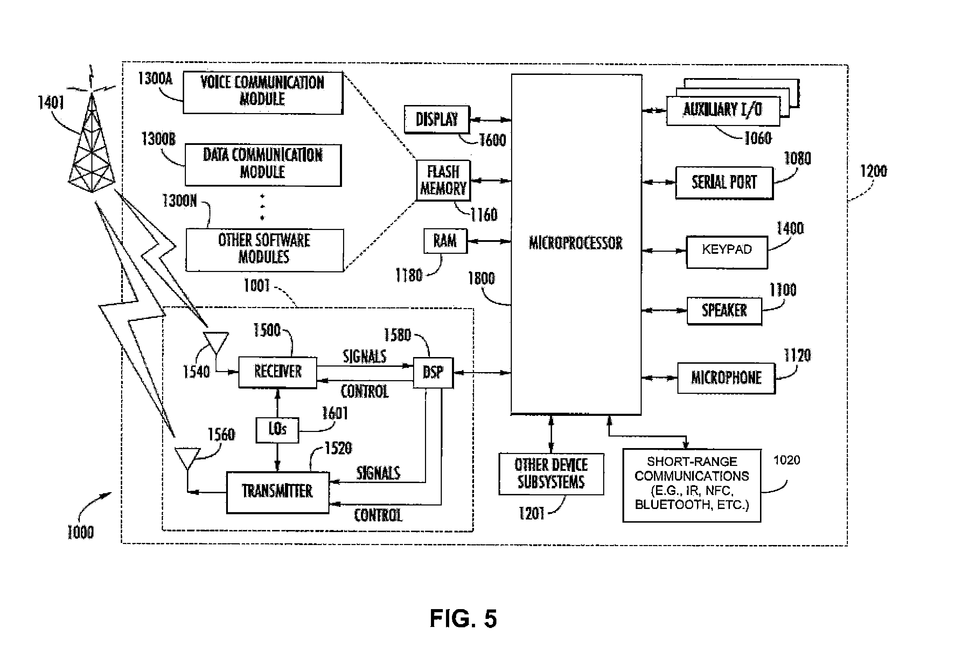

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem 1001 and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communication system comprising:
at least one mobile wireless communications device comprising a first display configured to display a primary resource having at least one hyperlink therein associated with a secondary resource, a first near field communication (NFC) transceiver, and a first controller coupled to said first display and said first NFC transceiver; and
a computing device comprising a second display, a second NFC transceiver, and a second controller coupled to said second display and said second NFC transceiver;
said first controller being configured to store the at least one hyperlink based upon displaying of the primary resource on said first display and without displaying the secondary resource on the first display, and to send the stored at least one hyperlink to said computing device using said first and second NFC transceivers;
said second controller configured to display the secondary resource associated with the at least one hyperlink on said second display.

2. The wireless communication system according to Claim 1 wherein the primary resource comprises at least one of a Web page and an electronic mail (email) message.

3. The wireless communications system according to Claim 1 wherein the secondary resource comprises at least one of a Web page and a digital document.

4. The wireless communication system according to Claim 1 wherein said first controller selectively sends the stored at least one hyperlink associated with the secondary resource based upon at least one of a stored preference value or a priority value.

5. The wireless communication system according to Claim 1 wherein said first controller is further configured to send a parent hyperlink associated with the primary resource to said computing device.

6. The wireless communication system according to Claim 1 wherein said first controller cooperates with said first display to provide graphical user interface prompts for sending the stored at least one hyperlink to said computing device.

7. The wireless communication system according to Claim 1 wherein the at least one hyperlink comprises a plurality of nested hyperlinks.

8. The wireless communication system according to Claim 1 wherein said second display is larger than said first display.

9. A mobile wireless communications device communicating with a computing device having a second display, a second near field communication (NFC) transceiver, and a second controller, the mobile wireless communications device comprising:
a first display configured to a display a primary resource having at least one hyperlink therein associated with a secondary resource;
a first NFC transceiver; and
a first controller coupled to said first display and said first NFC transceiver and being configured to store the at least one hyperlink based upon displaying of the primary resource on said first display and without displaying the secondary resource on said first display, and to send the stored at least one hyperlink to the computing device using the first and second NFC transceivers, the second controller being configured to display the secondary resource associated with the at least one hyperlink on the second display.

10. The mobile wireless communications device according to Claim 9 wherein said first controller selectively sends the stored at least one hyperlink associated with the secondary resource based upon at least one of a stored preference value or a priority value.

11. A method of operating a wireless communication system comprising at least one mobile wireless communications device comprising a first display for displaying a primary resource having at least one hyperlink therein associated with a secondary resource and a first near field communication (NFC) transceiver, and a computing device comprising a second display and a second NFC transceiver, the method comprising:
using the at least one mobile wireless communications device to store the at least one hyperlink based upon displaying of the primary resource on the first display and without displaying the secondary resource on the first display, and to send the stored at least one hyperlink to the computing device using the first and second NFC transceivers; and
using the computing device to display the secondary resource associated with the at least one hyperlink on the second display.

12. The method according to Claim 11 further comprising using the at least one mobile wireless communications device to selectively send the stored at least one hyperlink associated with the secondary resource based upon at least one of a stored preference value or a priority value.

13. The method according to Claim 11 further comprising using the at least one mobile wireless communications device to the computing device with the first and second NFC transceivers.

14. The method according to Claim 11 further comprising using the at least one mobile wireless communications device to provide graphical user interface prompts for sending the stored at least one hyperlink associated with the secondary resource to the computing device.

15. The method according to Claim 11 further comprising using the at least one mobile wireless communication device to send a parent hyperlink associated with the primary resource to the computing device.

## Amended claims

### Amended claims in accordance with Rule 137(2) EPC.

**1.** A wireless communication system (10) comprising:
at least one mobile wireless communications device (11) comprising a first display (13) configured to display a primary resource having at least one hyperlink therein associated with a secondary resource, a first near field communication "NFC" transceiver (12), and a first controller (14) coupled to said first display and said first NFC transceiver; and
a computing device (21) comprising a second display (23), a second NFC transceiver (22), and a second controller (24) coupled to said second display and said second NFC transceiver;
said first controller being configured to store the at least one hyperlink based upon displaying of the primary resource on said first display and without displaying the secondary resource on the first display, and to selectively send the stored at least one hyperlink to said computing device using said first and second NFC transceivers based upon at least one of a stored preference value or a priority value;
said second controller configured to display the secondary resource associated with the at least one hyperlink on said second display.

**2.** The wireless communication system according to Claim 1 wherein the primary resource comprises at least one of a Web page and an electronic mail "email" message.

**3.** The wireless communications system according to Claim 1 wherein the secondary resource comprises at least one of a Web page and a digital document.

**4.** The wireless communication system according to Claim 1 wherein said first controller is further configured to send a parent hyperlink associated with the primary resource to said computing device.

**5.** The wireless communication system according to Claim 1 wherein said first controller cooperates with said first display to provide graphical user interface prompts for sending the stored at least one hyperlink to said computing device.

**6.** The wireless communication system according to Claim 1 wherein the at least one hyperlink comprises a plurality of nested hyperlinks.

**7.** The wireless communication system according to Claim 1 wherein said second display is larger than said first display.

**8.** A mobile wireless communications device (11) communicating with a computing device (21) having a second display (23), a second near field communication "NFC" transceiver (22), and a second controller, the mobile wireless communications device comprising:
a first display (13) configured to a display a primary resource having at least one hyperlink therein associated with a secondary resource;
a first NFC transceiver (12); and
a first controller (14) coupled to said first display and said first NFC transceiver and being configured to store the at least one hyperlink based upon displaying of the primary resource on said first display and without displaying the secondary resource on said first display, and to selectively send the stored at least one hyperlink to the computing device using the first and second NFC transceivers based upon at least one of a stored preference value or a priority value, the second controller being configured to display the secondary resource associated with the at least one hyperlink on the second display.

**9.** A method of operating a mobile wireless communications device (11) comprising a first display (13) for displaying a primary resource having at least one hyperlink therein associated with a secondary resource and a first near field communication "NFC" transceiver (12), the method comprising:
using the at least one mobile wireless communications device to store the at least one hyperlink based upon displaying of the primary resource on the first display and without displaying the secondary resource on the first display; and selectively sending the stored at least one hyperlink to a computing device (21) comprising a second display (23) and a second NFC transceiver (22) using the first NFC transceiver based upon at least one of a stored preference value or a priority value for the computing device to display the secondary resource associated with the at least one hyperlink on the second display.

**10.** The method according to Claim 9 further comprising using the at least one mobile wireless communications device to provide graphical user interface prompts for sending the stored at least one hyperlink associated with the secondary resource to the computing device.

**11.** The method according to Claim 9 further comprising using the at least one mobile wireless communication device to send a parent hyperlink associated with the primary resource to the computing device.
